# FASCICULE DE BREVET EUROPEEN

(11) **EP 4 594 560 B1**
(45) Date de publication et mention de la délivrance du brevet: **03.06.2026**
(21) Numéro de dépôt: 23799005.6
(22) Date de dépôt: 28.09.2023
(51) Int. Cl.: D03C 3/40, D03C 3/42

(54) **DISPOSITIF DE SURVEILLANCE DU TISSAGE AU MOYEN DE CAPTEURS DE DÉFORMATION**
VORRICHTUNG ZUR ÜBERWACHUNG DES WEBENS MITTELS VERFORMUNGSSENSOREN
DEVICE FOR MONITORING WEAVING BY MEANS OF DEFORMATION SENSORS

(30) Priorité: 30.09.2022 FR 2209967
(43) Date de publication de la demande: 06.08.2025
(73) Titulaire: SAFRAN, 75015 Paris (FR)
(72) Inventeur: DEL SORBO, Pietro, 77550 MOISSY-CRAMAYEL (FR); TRANQUART, Bastien, 77550 MOISSY-CRAMAYEL (FR); MERMOULI, Salah Eddine, 77550 MOISSY-CRAMAYEL (FR)
(74) Mandataire: Regimbeau
(86) Numéro de dépôt international: PCT/FR2023/051491
(87) Numéro de publication internationale: WO 2024/069101

(56) Documents cités:
- CN-A- 113 122 986
- CN-U- 207 268 605
- CN-U- 208 829 837

## Description

### DOMAINE TECHNIQUE

L'invention concerne le contrôle de la fabrication de préforme tissée par un métier à tisser et plus précisément un dispositif de surveillance de données pour des métiers à tisser dans un but de gestion du tissage.

### ETAT DE LA TECHNIQUE

Un métier à tisser du type Jacquard peut être utilisé pour fabriquer des préformes tridimensionnelles (3D) par tissage multicouche entre une pluralité de couches de fils de chaîne et une pluralité de couches de fils de trame. Un métier à tisser Jacquard peut en outre être équipé d'une commande numérique permettant notamment de tisser de manière automatisée des préformes avec des variations d'épaisseur, des variations de largeur et des déliaisons. Ces préformes fibreuses peuvent ensuite être injectées avec une résine thermodurcissable afin de fabriquer, entre autres, des pièces de turboréacteur telles que des aubes de soufflante, un carter de rétention et/ou des redresseurs.

Il est important que le tissage présente une bonne qualité. Et la possibilité d'identifier rapidement, ou même de façon préventive, des défauts de fabrication par un algorithme automatisé permet un gain significatif en termes de coûts de production.

A cet égard, différents systèmes de contrôle automatisés ont été développés.

Une première famille de systèmes de contrôle dits « en ligne » (ou « on line » dans la terminologie anglo-saxonne) sont basés sur des algorithmes qui travaillent les données dites « chaudes », qui viennent d'être acquises pendant la fabrication de la préforme. Ils travaillent parallèlement au métier à tisser et permettent l'arrêt préventif du tissage en cas de problèmes pendant le processus, ou bien lors d'un échec.

Une deuxième famille de systèmes de contrôle dits « hors ligne » (ou « off line » dans la terminologie anglo-saxonne) sont basés sur des algorithmes qui travaillent les données dites « froides », qui sont extraites du métier à tisser une fois le tissage achevé. Ce genre d'approche permet, par exemple, d'éviter des transformations ultérieures d'une préforme, voire d'une pièce après injection de résine, qui serait non conforme, ou encore de supporter et accélérer les contrôles réalisés par des opérateurs dans la suite de la fabrication et du contrôle de la préforme et/ou de la pièce, par exemple en remontant des indications et leur localisation ou leur nature dans des fiches suiveuses.

Certains systèmes de contrôle permettent un contrôle hors ligne avec une fonction dite « retour de suite ». De tels systèmes de contrôle détectent, pour chaque moteur du métier à tisser, et pour chaque insertion de trame, une seule valeur d'intensité de couple moteur. Cependant cette valeur ne représente que la valeur de couple maximum déployée pendant une insertion de trame pour le moteur spécifié, et ce sur une échelle discrète. Cette fonction présente cependant plusieurs inconvénients en ce qu'elle est dépendante de la technologie du moteur auquel elle est liée, en ce qu'elle ne fournit qu'une seule valeur par cycle d'insertion et en ce qu'elle présente une faible discrétisation.

En tout état de cause, les données associées au fonctionnement du métier à tisser détiennent un rôle clef dans l'identification d'anomalies au sein des pièces fabriquées à l'aide du métier à tisser. Mais les algorithmes développés à cet égard ne peuvent pas toujours détecter des anomalies, notamment lorsqu'ils n'ont pas accès aux bonnes mesures, ce qui ajoute la nécessité d'équiper les machines à tisser avec des systèmes de capteurs capables de fournir des mesures, corrélées avec des échecs potentiels. CN 113 122 986 A divulgue un système comprenant un harnais pour un métier à tisser comprenant une pluralité de lices, le harnais comprenant un collecteur, une planche de colletage et une pluralité de cordes guidées par la planche de colletage et le collecteur, chacune des cordes de la pluralité de cordes étant prévue pour être reliée à une de la pluralité de lices du métier à tisser ; et un dispositif de surveillance de la fabrication d'une préforme tissée par le métier à tisser, le dispositif de surveillance comprenant une pluralité de capteurs.

### EXPOSE DE L'INVENTION

Un but de l'invention est d'améliorer la surveillance de la fabrication d'une préforme tissée par un métier à tisser.

A cet effet, l'invention propose un système comprenant un harnais pour métier à tisser comprenant une pluralité de lices, le harnais comprenant un collecteur, une planche de colletage et une pluralité de cordes guidées par la planche de colletage et le collecteur, chacune des cordes de la pluralité de cordes étant prévue pour être reliée à une de la pluralité de lices du métier à tisser ; et un dispositif de surveillance de la fabrication d'une préforme tissée par le métier à tisser, le dispositif de surveillance comprenant : une pluralité de capteurs, chaque capteur de la pluralité de capteurs étant relié à une corde de la pluralité de cordes et étant configuré pour mesurer une déformation de la corde, la déformation étant induite par une force exercée par le métier à tisser sur la corde auquel le capteur est relié ; et une unité de traitement reliée à la pluralité de capteurs et configurée pour analyser la déformation de sorte à identifier une anomalie de fabrication sur au moins une corde.

L'invention est avantageusement complétée par les caractéristiques suivantes, prises seules ou en une quelconque de leur combinaison techniquement possible :
l'unité de traitement est configurée pour analyser en temps réel la déformation, de manière continue ou à échantillonnage contrôlé ;
l'unité de traitement est configurée pour analyser la déformation pendant toute la durée de la fabrication de la préforme tissée ;
chaque capteur de la pluralité de capteurs comprend une jauge de déformation, de préférence le capteur est un capteur de type piézo-électrique ;
chaque capteur de la pluralité de capteurs comprend deux extrémités, chacune des deux extrémités étant fixée sur la corde au moyen d'un élément d'adhésion de sorte à ce que le capteur s'étende le long de la corde, l'élément d'adhésion comprenant de préférence de la résine ;
chaque capteur de la pluralité de capteurs est fixé sur la corde de sorte à réaliser une jonction entre deux sections de la corde ;
chaque capteur de la pluralité de capteurs est positionné sur la corde de sorte à s'étendre entre la planche de colletage et le collecteur ;
chaque capteur de la pluralité de capteurs comprend au moins une portion de la corde, l'au moins une portion de corde étant configurée pour mesurer la déformation de la corde induite par une force exercée par le métier à tisser sur la corde ; l'unité de traitement est configurée pour transmettre au métier à tisser des consignes issues d'une analyse de la déformation.

Ainsi, l'invention permet de réaliser des mesures en continu et traite plusieurs valeurs par cycle d'insertion. De plus son échelle de discrétisation du signal peut être choisie à la demande car elle ne dépend que de l'unité d'acquisition qui est indépendante du métier à tisser.

En outre, ce système d'analyse est compatible avec les différents types de harnais, électroniques ou mécaniques, et modulable à chaque métier à tisser.

Le système selon l'invention permet également d'obtenir des informations sur le tissage en temps réel.

La possibilité de fixer un capteur par corde du harnais du métier à tisser permet d'identifier de manière précise et optimale le type de problème ainsi que son impact sur la préforme fabriquée.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une vue schématique d'un métier à tisser du type Jacquard ;
- la figure 2 illustre une vue schématique d'un harnais selon un mode de réalisation ;
- la figure 3A et la figure 3B illustrent différents états d'un capteur sur une corde selon un mode de réalisation ;
- la figure 4 illustre une corde du harnais selon un mode de réalisation ;
- la figure 5 illustre les étapes du procédé de surveillance selon un mode de réalisation.

Sur l'ensemble des figures les éléments similaires portent des références identiques.

### DESCRIPTION DETAILLEE

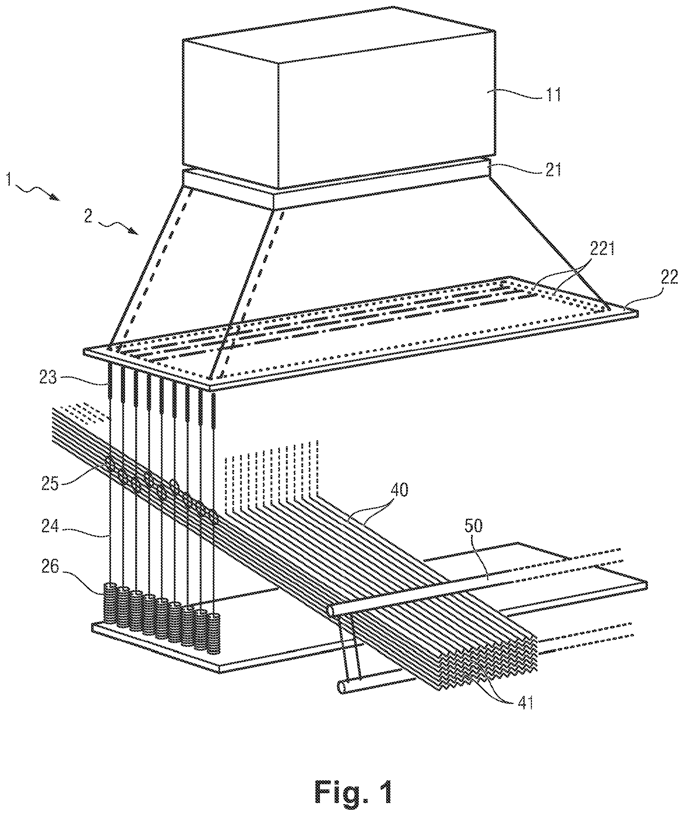

La **figure 1** illustre schématiquement un métier à tisser 1 du type Jacquard utilisé pour la réalisation de préformes tridimensionnelles (3D) obtenues par tissage multicouche entre une pluralité de couches de fils de chaîne et une pluralité de couches de fils de trame.

Le métier à tisser 1 est équipé d'une mécanique Jacquard comprenant une pluralité de crochets de commande. Les crochets de commande de la mécanique Jacquard sont actionnés en translation au cours du tissage. La mécanique Jacquard est supportée par une superstructure 11 nommée tête Jacquard. Le métier à tisser 1 comprend également un harnais 2 et une pluralité de lices 24. Le harnais 2 comprend une pluralité de cordes 23. Chaque corde 23 de la pluralité de cordes 23 présente au moins deux extrémités, chaque corde 23 étant reliée par une des deux extrémités à un des crochets de commande de la mécanique Jacquard et par l'autre des extrémités à au moins une des lices 24. Le harnais 2 comprend également une planche de colletage 22 et un collecteur 21 adaptés pour guider les cordes 23 du harnais 2. Le métier à tisser 1 comprend en outre un dispositif de surveillance 3 comprenant au moins un capteur 30, une unité de traitement 31 et au moins un fil de liaison 32 permettant de relier le ou les capteurs 30 à l'unité de traitement 31. Selon un mode de réalisation présenté ci-après, le dispositif de surveillance 3 comprend une pluralité de capteurs 30, de sorte que chaque capteur 30 soit relié à chaque corde 23, et qu'avantageusement chaque corde 23 soit reliée à exactement un capteur 30.

Chaque lice 24 comprend un œillet 25 traversé par un fil de chaîne 40. Les lices 24 et leurs œillets 25 associés sont animés d'un mouvement d'oscillation sensiblement vertical. Le déplacement de chaque lice 24 dépend de plusieurs forces : la force de rappel de ressort 26, la force de rappel d'actionneurs de la tête Jacquard 11, la force de rappel des fils de chaîne 40 et les éventuels frottements dus aux interactions au niveau des œillets 25. Les lices 24 permettent de soulever certains fils de chaîne 40 et de créer ainsi une foule permettant l'introduction de fils de trame 41. Plus précisément, chaque lice 24 est actionnée et pilotée individuellement ce qui permet de remonter ou de descendre chaque fil de chaîne 40 indépendamment. Il devient ainsi possible de réaliser l'écartement des fils de chaîne 40 nécessaire au passage d'une lance qui emporte le fil de trame 41 et de tisser des motifs complexes et de faire passer les fils de chaîne 40 d'une couche à une autre permettant la création d'une architecture fibreuse en trois dimensions. Après chaque passage de fil de trame 41, un peigne battant 50 compacte le tissu sortant du métier à tisser 1, ce qui permet d'obtenir le tissage recherché.

Les lices 24 sont réparties spatialement en fonction de la position des trous 221 de la planche de colletage 22, c'est-à-dire suivant une pluralité de colonnes et de lignes. La densité des trous 221 dans la planche de colletage 22 correspond à la densité du tissu à réaliser, c'est-à-dire qu'on retrouve dans la planche de colletage 22 un espacement entre chaque colonne de trous équivalent à celui présent entre chaque colonne de chaîne dans le tissu à réaliser. Le métier à tisser 1 comprend en outre un cantre de support de plusieurs bobines de fils de chaîne. Chaque bobine est mobile en rotation autour d'un axe de façon à pouvoir dévider son fil de chaîne. Chaque fil de chaîne peut passer à travers des œillets 25 de guidage puis par un trou d'une planche de collecte similaire à la planche de colletage 22, et traverse enfin l'œillet 25 d'une lice 24.

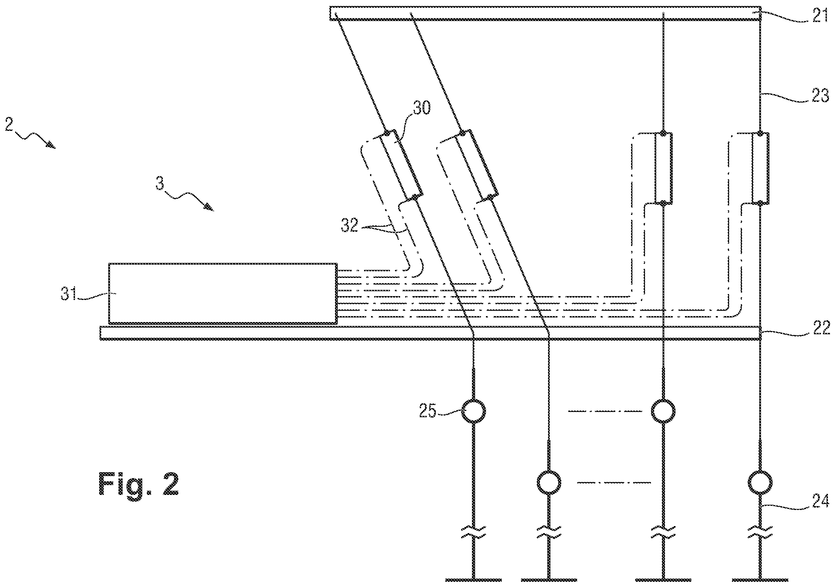

La **figure** 2 illustre le harnais 2 d'un métier à tisser 1 selon un mode de réalisation. Comme expliqué précédemment, le harnais 2 comprend plusieurs cordes 23. Les cordes 23 du harnais 2 sont chacune attachée par une première de leurs extrémités à un crochet de commande de la mécanique Jacquard. Ces cordes 23 sont donc soumises de manière indépendante à une force exercée par le crochet de commande auquel elles sont liées. Les cordes 23 sont chacune attachée, par une deuxième de leurs extrémités, à une lice 24. Entre cette première et cette deuxième extrémité, chaque corde 23 est guidée par un collecteur 21 et une planche de colletage 22. Le collecteur 21 du harnais 2 est positionné du côté de la première extrémité, à proximité de la mécanique Jacquard, et la planche de colletage 22 du côté de la deuxième extrémité et donc à proximité des lices 24. Ainsi, chaque corde 23 s'étend depuis la mécanique Jacquard jusqu'à une lice 24 en passant par le collecteur 21 puis à travers un trou 221 de la planche de colletage 22.

Un tel harnais peut être lié à un dispositif de surveillance 3 permettant d'analyser les déformations subies par les cordes 23. Le dispositif de surveillance 3 comprend une pluralité de capteurs 30, une unité de traitement 31 et une pluralité de fils de liaisons 32. Préférentiellement, chaque capteur 30 est relié à l'unité de traitement 31, par l'intermédiaire d'un fil de liaison 32. Avantageusement, chaque fil de liaison 32 comprend un câble d'entrée et un câble de sortie reliant chacun une extrémité du capteur 30 à l'unité de traitement 31.

Selon un mode de réalisation préféré, chaque capteur 30 est relié à chaque corde 23. Avantageusement chaque corde 23 est reliée à exactement un capteur 30. Ainsi, le dispositif de surveillance 3 peut surveiller les évolutions de tension des cordes 23 et donc relever des changements identifiés comme relevant de défauts ou d'anomalies de tissage. Durant le tissage des erreurs peuvent avoir lieu. Par exemple, il est possible qu'une corde 23 se coince ou rentre en contact avec une autre ou bien se rompe. Il arrive également qu'une des cordes 23 ne soit pas dans une bonne position, ce qui peut générer des surtensions ou bien des sous-tensions. De telles perturbations sont néfastes à la qualité de la préforme tissée.

L'unité de traitement 31 analyse la ou les déformations liées à l'application de forces sur les cordes 23 grâce aux données mesurées par les capteurs 30 positionnés sur les cordes 23 et transmises à elle via les fils de liaisons 32.

Le dispositif de surveillance 3 est indépendant du métier à tisser 1, il peut donc s'adapter à chaque métier à tisser 1. Il est en mesure de détecter toute anomalie de tension sur chaque corde 23 comprenant un capteur 30. En outre, l'échelle de discrétisation du signal analysé ne dépend que du dispositif de surveillance 3 et peut donc être choisie indépendamment du métier à tisser 1. Ainsi, l'échantillonnage est modifiable et peut être contrôlé indépendamment du métier à tisser 1.

Chaque capteur 30 est positionné sur chaque corde 23 du harnais 2 et avantageusement entre le collecteur 21 et la planche de colletage 22 de manière à éviter les problèmes de frottement entre les capteurs 30, les espacements entre les cordes 23 étant plus important à ce niveau et de sorte à s'assurer que la présence des fils de liaison 32 soit restreinte à cette zone. La position du capteur 30 entre la planche de colletage 22 et le collecteur 21 permet d'éviter que les fils de liaison 32 des capteurs 30 à l'unité de traitement 31 ne viennent perturber le tissage. Elle facilite l'installation des capteurs 30 et évite le coincement des cordes 23 lié à la présence des capteurs 30.

L'environnement de travail n'est donc pas perturbé par la présence des capteurs 30 et des fils de liaison 32 correspondants.

Selon un mode de réalisation, les capteurs 30 sont positionnés de manière à ne pas rentrer en contact avec le collecteur 21 et/ou la planche de colletage 22 au cours des déplacements de la corde 23 entre une position haute et une position basse. La position haute est obtenue sous l'effet d'une traction exercée par le crochet lié à la corde 23 et la position basse est obtenue une fois relâchée sous l'effet de la force de rappel du ressort 26. Un mode de fonctionnement du capteur 30 est expliqué en détails ci-après.

Les capteurs 30 sont préférentiellement des jauges de déformation avantageusement de type piézo-électrique mais ils peuvent être de tout autre type. Les extrémités de chaque capteur 30 sont fixées sur une des corde 23 de manière à s'allonger selon la déformation de la corde 23 tout en permettant sa libre déformation. Avantageusement les capteurs 30 sont fixés sur les cordes 23 au moyen d'une résine ou d'un autre matériau adhésif.

Selon un mode de réalisation, les extrémités de chaque capteur 30 sont fixées sur une corde 23 de manière à être le long d'une portion de la corde 23. On pourrait appeler cette configuration « fixation en parallèle », et selon un autre mode de réalisation, les extrémités de chaque capteur 30 sont fixées sur une corde 23 de manière à réaliser la jonction entre deux sections de la corde 23, on pourrait appeler cette autre configuration « fixation en série ».

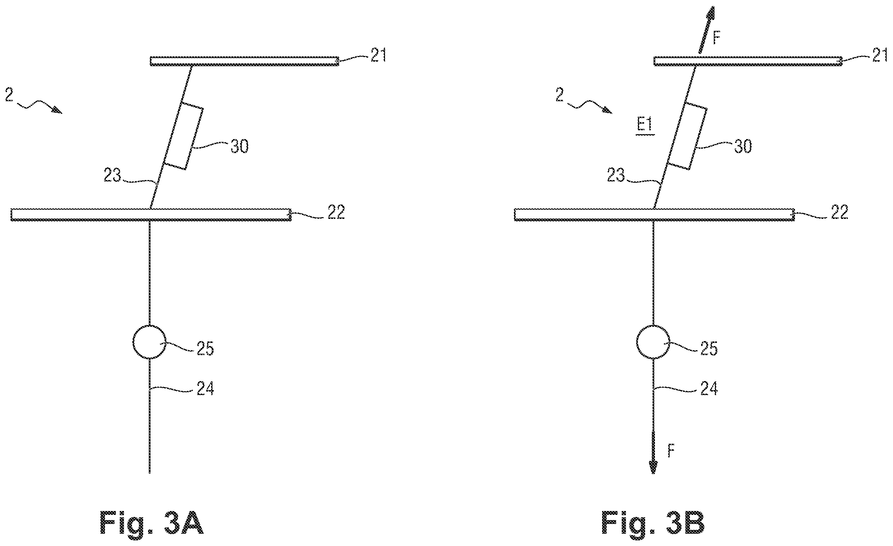

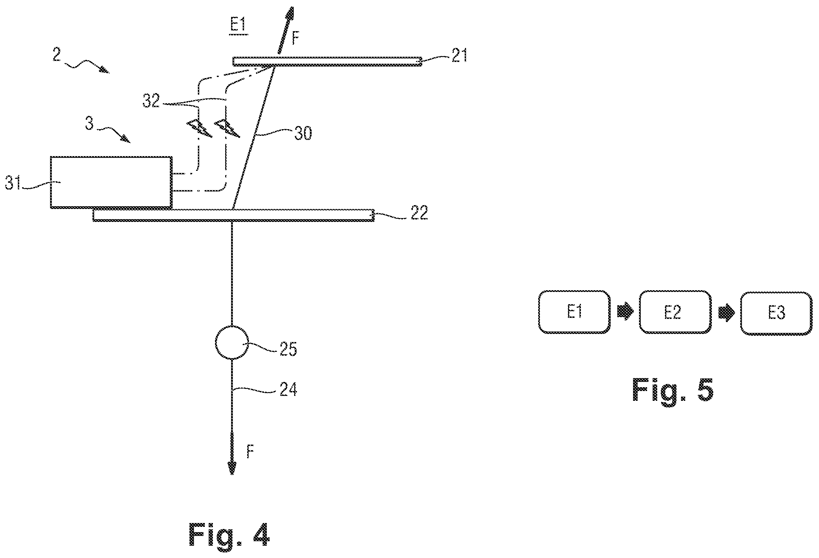

Les **figures 3A et 3B** illustrent des états d'un capteur 30 au cours de l'application d'une force F sur la corde 23 à laquelle il est fixé. Les extrémités du capteur 30 étant liées à la corde 23 comme expliqué ci-dessus, le capteur 30 subit le même déplacement que la corde 23 au cours de l'application de la force F sur cette corde 30. Le capteur 30 mesure alors la force F appliquée à la corde 23 en mesurant la déformation induite par le déplacement de la corde 23. En effet, la déformation est une fonction de la tension exercée sur la corde 23 par la force F. Si aucune force n'est appliquée à la corde 23 (Fig. 3A), le capteur 30 ne mesure pas de déformation et mesure donc une force relative nulle ; tandis que si une force F est appliquée (Fig. 3B), le capteur 30 mesure une déformation de la corde 23 et mesure la force F. Selon un mode de réalisation, illustré par la **figure** 4, chaque capteur 30 comprend au moins une portion de chaque corde 23. Cette portion de corde 23 est configurée pour mesurer la déformation de la corde 23 induite par une force F exercée par le métier à tisser 1 sur la corde 23. Préférentiellement le capteur 30 comprend la totalité de la longueur de la corde 23, de cette façon la corde 23 est considérée comme piézo-résisitive. La corde 23 a alors, outre sa fonction de transmission des efforts du métier Jacquard aux lices 24, une fonction de mesure. La corde 23 prend, dans ce mode de réalisation, le rôle et la fonction du capteur 30. Ce mode de réalisation permet de limiter l'encombrement du métier à tisser 1 et améliore l'intégration du dispositif de surveillance 3 dans le métier à tisser 1. De plus, la précision des mesures en est améliorée.

La **figure** 5 illustre les étapes générales d'un procédé de surveillance de la fabrication d'une préforme tissée par un métier à tisser selon un mode de mise en oeuvre. La surveillance de la fabrication d'une préforme tissée met en oeuvre un métier à tisser 1. Le métier à tisser 1 est préférentiellement tel que décrit précédemment et illustré par la figure 1, mais il peut également être question de n'importe quel autre métier à tisser. Le métier à tisser 1 utilisé comprend un harnais 2 tel que décrit précédemment et illustré par la figure 2. Le harnais 2 comprend une pluralité de cordes 23 permettant de relier la mécanique Jacquard aux lices 24 soulevant les fils de chaîne 40. Les cordes 30 transmettent les mouvements des crochets de la mécanique Jacquard aux fils de chaine 40 et permettent ainsi de réaliser le tissage.

Un tel métier à tisser 1 comprenant au moins un capteur 30 sur chacune de ses cordes 23 est ensuite piloté par la mécanique Jacquard. Chaque crochet est commandé pour exercer une force F sur la corde 23 à laquelle il est lié, en fonction du programme de tissage. Au cours d'une étape d'application de la force F sur une (ou plusieurs) corde 23, celle-ci voit sa tension interne augmenter et la force F est transmise à la lice 24 liée à la corde 23. Le capteur 30, lié à la corde 23 sur laquelle la force F est exercée, mesure E1 alors la force appliquée à la corde 23 en mesurant la déformation induite par le déplacement de la corde 23. Comme expliqué précédemment, les extrémités de chaque capteur 30 étant reliées à une des cordes 23, la modification de la tension d'une corde 23, due à l'application d'une force, est mesurée par le capteur 30. Il est possible que la mécanique Jacquard actionne plusieurs crochets de commande simultanément, plusieurs cordes 23 sont alors soumises à une force F et les capteurs 30 fixés à ces cordes 23 mesurent E1 alors les forces appliquées à la pluralité de cordes 23.

Cette mesure est ensuite transmise par l'intermédiaire des fils de liaisons 32 reliant chaque capteur 30 à l'unité de traitement 31. L'unité de traitement 31 analyse E2 les données reçues par la pluralité de capteurs 30 afin d'identifier des anomalies de fabrication sur au moins une ou plusieurs des cordes 23.

Selon un mode de réalisation, l'unité de traitement 31 est adaptée pour transmettre E3 au métier à tisser 1 des consignes issues de l'analyse E2 des déformations de chaque corde 23 à laquelle un capteur 30 est relié. Ceci permet d'améliorer le procédé de tissage et éventuellement d'éviter une dégradation du métier et/ou de la préforme tissée plus importante.

## Revendications

1. Système comprenant :
- un harnais (2) pour métier à tisser (1) comprenant une pluralité de lices (24), le harnais (2) comprenant un collecteur (21), une planche de colletage (22) et une pluralité de cordes (23) guidées par la planche de colletage (22) et le collecteur (21), chacune des cordes (23) de la pluralité de cordes (23) étant prévue pour être reliée à une de la pluralité de lices (24) du métier à tisser (1) ; et
- un dispositif de surveillance (3) de la fabrication d'une préforme tissée par le métier à tisser (1), le dispositif de surveillance (3) comprenant :
- une pluralité de capteurs (30), le système étant **caractérisé en ce que** chaque capteur (30) de la pluralité de capteurs est relié à une corde (23) de la pluralité de cordes (23) et est configuré pour mesurer une déformation de la corde (23), la déformation étant induite par une force exercée par le métier à tisser (1) sur la corde (23) auquel le capteur (30) est relié ; et **en ce que** le dispositif de surveillance (3) comprend
- une unité de traitement (31) reliée à la pluralité de capteurs (30) et configurée pour analyser la déformation de sorte à identifier une anomalie de fabrication sur au moins une corde (23).

2. Système selon la revendication 1, dans lequel l'unité de traitement (31) est configurée pour analyser en temps réel la déformation, de manière continue ou à échantillonnage contrôlé.

3. Système selon l'une quelconque des revendications 1 à 2, dans lequel l'unité de traitement (31) est configurée pour analyser la déformation pendant toute la durée de la fabrication de la préforme tissée.

4. Système selon l'une quelconque des revendications 1 à 3, dans lequel chaque capteur (30) de la pluralité de capteurs (30) comprend une jauge de déformation, de préférence le capteur (30) est un capteur de type piézo-électrique.

5. Système selon l'une quelconque des revendications 1 à 4, dans lequel chaque capteur (30) de la pluralité de capteurs (30) comprend deux extrémités, chacune des deux extrémités étant fixée sur la corde (23) au moyen d'un élément d'adhésion de sorte à ce que le capteur (30) s'étende le long de la corde (23), l'élément d'adhésion comprenant de préférence de la résine.

6. Système selon l'une quelconque des revendications 1 à 4, dans lequel chaque capteur (30) de la pluralité de capteurs (30) est fixé sur la corde (23) de sorte à réaliser une jonction entre deux sections de la corde (23).

7. Système selon l'une quelconque des revendications 1 à 6, dans lequel chaque capteur (30) de la pluralité de capteurs (30) est positionné sur la corde (23) de sorte à s'étendre entre la planche de colletage (22) et le collecteur (21).

8. Système selon l'une quelconque des revendications 1 à 4, dans lequel chaque capteur (30) de la pluralité de capteurs (30) comprend au moins une portion de la corde (23), l'au moins une portion de corde (23) étant configurée pour mesurer la déformation de la corde (23) induite par une force exercée par le métier à tisser (1) sur la corde (23).

9. Système selon l'une quelconque des revendications 1 à 8, dans lequel l'unité de traitement (31) est configurée pour transmettre au métier à tisser (1) des consignes issues d'une analyse de la déformation.

## Patentansprüche

1. System, umfassend:
- ein Webgeschirr (2) für einen Webstuhl (1), das eine Vielzahl von Webelitzen (24) umfasst, wobei das Webgeschirr (2) einen Sammelbehälter (21), ein Rollenzugbrett (22) und eine Vielzahl von Schnüren (23), die von dem Rollenzugbrett (22) und dem Sammelbehälter (21) geführt werden, umfasst, wobei jede der Schnüren (23) der Vielzahl von Schnüren (23) dazu vorgesehen ist, mit einer der Vielzahl von Webelitzen (24) des Webstuhls (1) verbunden zu sein; und
- eine Vorrichtung zum Überwachen (3) der Herstellung einer Vorform, die von dem Webstuhl (1) gewebt wird, wobei die Überwachungsvorrichtung (3) umfasst:
- eine Vielzahl von Sensoren (30),
wobei das System **dadurch gekennzeichnet ist,**
**dass** jeder Sensor (30) der Vielzahl von Sensoren mit einer Schnur (23) der Vielzahl von Schnüren (23) verbunden ist, und dazu konfiguriert ist, eine Verformung der Schnur (23) zu messen, wobei die Verformung durch eine Kraft hervorgerufen wird, die durch den Webstuhl (1) auf die Schnur (23), mit welcher der Sensor (30) verbunden ist, ausgeübt wird; und
**dass** die Überwachungsvorrichtung (3) umfasst
- eine Verarbeitungseinheit (31), die mit der Vielzahl von Sensoren (30) verbunden ist, und dazu konfiguriert ist, die Verformung derart zu analysieren, dass eine Anomalie der Herstellung an mindestens einer Schnur (23) identifiziert wird.

2. System nach Anspruch 1, wobei die Verarbeitungseinheit (31) dazu konfiguriert ist, die Verformung kontinuierlich oder mit gesteuerter Probenahme in Echtzeit zu analysieren.

3. System nach einem der Ansprüche 1 bis 2, wobei die Verarbeitungseinheit (31) dazu konfiguriert ist, die Verformung während der gesamten Dauer der Herstellung der gewebten Vorform zu analysieren.

4. System nach einem der Ansprüche 1 bis 3, wobei jeder Sensor (30) der Vielzahl von Sensoren (30) einen Dehnungsmessstreifen umfasst, wobei der Sensor (30) bevorzugt ein Sensor piezoelektrischer Art ist.

5. System nach einem der Ansprüche 1 bis 4, wobei jeder Sensor (30) der Vielzahl von Sensoren (30) zwei Enden umfasst, wobei jedes der beiden Enden anhand eines Haftelements an der Schnur (23) befestigt ist, so dass sich der Sensor (30) entlang der Schnur (23) erstreckt, wobei das Haftelement bevorzugt Harz umfasst.

6. System nach einem der Ansprüche 1 bis 4, wobei jeder Sensor (30) der Vielzahl von Sensoren (30) derart an der Schnur (23) befestigt ist, dass eine Zusammenführung zwischen zwei Teilabschnitten der Schnur (23) hergestellt wird.

7. System nach einem der Ansprüche 1 bis 6, wobei jeder Sensor (30) der Vielzahl von Sensoren (30) derart auf der Schnur (23) positioniert ist, dass er sich zwischen dem Rollenzugbrett (22) und dem Sammelbehälter (21) erstreckt.

8. System nach einem der Ansprüche 1 bis 4, wobei jeder Sensor (30) der Vielzahl von Sensoren (30) mindestens einen Abschnitt der Schnur (23) umfasst, wobei der mindestens eine Abschnitt der Schnur (23) dazu konfiguriert ist, die Verformung der Schnur (23) zu messen, die durch eine Kraft hervorgerufen wird, die durch den Webstuhl (1) auf die Schnur (23) ausgeübt wird.

9. System nach einem der Ansprüche 1 bis 8, wobei die Verarbeitungseinheit (31) dazu konfiguriert ist, Anweisungen, die sich aus einer Analyse der Verformung ergeben, an den Webstuhl (1) zu übertragen.

## Claims

1. A system comprising:
- a harness (2) for a loom (1) comprising a plurality of heddles (24), the harness (2) comprising a collector (21), a tying board (22) and a plurality of cords (23) guided by the tying board (22) and the collector (21), each of the cords (23) of the plurality of cords (23) being designed to be connected to one of the plurality of heddles (24) of the loom (1); and
- a device (3) for monitoring the manufacture of a woven preform by the loom (1), the monitoring device (3) comprising:
- a plurality of sensors (30), the system being **characterized in that** each sensor (30) of the plurality of sensors is connected to a cord (23) of the plurality of cords (23) and is configured to measure a deformation of the cord (23), the deformation being induced by a force applied by the loom (1) to the cord (23) to which the sensor (30) is connected; and **in that** device (3) comprises
- a processing unit (31) connected to the plurality of sensors (30) and configured to analyze the deformation so as to identify a manufacturing anomaly on at least one cord (23).

2. The system according to claim 1, wherein the processing unit (31) is configured to analyze the deformation in real time, continuously or with controlled sampling.

3. The system according to any one of claims 1 to 2, wherein the processing unit (31) is configured to analyze the deformation throughout the manufacture of the woven preform.

4. The system according to any one of claims 1 to 3, wherein each sensor (30) of the plurality of sensors (30) comprises a strain gauge, preferably the sensor (30) is a piezoelectric type sensor.

5. The system according to any one of claims 1 to 4, wherein each sensor (30) of the plurality of sensors (30) comprises two ends, each of the two ends being fixed to the cord (23) by means of an adhesion element so that the sensor (30) extends along the cord (23), the adhesion element preferably comprising resin.

6. The system according to any one of claims 1 to 4, wherein each sensor (30) of the plurality of sensors (30) is fixed to the cord (23) so as to make a junction between two sections of the cord (23).

7. The system according to any one of claims 1 to 6, wherein each sensor (30) of the plurality of sensors (30) is positioned on the cord (23) so as to extend between the tying board (22) and the collector (21).

8. The system according to any one of claims 1 to 4, wherein each sensor (30) of the plurality of sensors (30) comprises at least a portion of the cord (23), the at least one cord portion (23) being configured to measure the deformation of the cord (23) induced by a force applied to the cord (23) by the loom (1).

9. The system according to any one of claims 1 to 8, wherein the processing unit (31) is configured to transmit to the loom (1) instructions resulting from an analysis of the deformation.
